# EUROPÄISCHE PATENTSCHRIFT

(11) **EP 2 780 232 B1**
(45) Veröffentlichungstag und Bekanntmachung des Hinweises auf die Patenterteilung: **14.06.2017**
(21) Anmeldenummer: 12797684.3
(22) Anmeldetag: 13.11.2012
(51) Int. Cl.: B65B 1/28, B65B 69/00, B65G 69/18

(54) **ENTLEERVERFAHREN UND ENTLEERVORRICHTUNG FÜR EIN KONTAMINATIONSFREIES ENTLEEREN EINES ZUMINDEST TEILWEISE FLEXIBLEN GEBINDES**
DISCHARGE METHOD AND DISCHARGE DEVICE FOR DISCHARGING AN AT LEAST PARTIALLY FLEXIBLE CONTAINER WITHOUT CONTAMINATION
PROCÉDÉ ET DISPOSITIF DE VIDAGE SANS CONTAMINATION D'UN EMBALLAGE AU MOINS PARTIELLEMENT FLEXIBLE

(30) Priorität: 14.11.2011 DE 102011086278
(43) Veröffentlichungstag der Anmeldung: 24.09.2014
(73) Patentinhaber: FLECOTEC AG, 79379 Müllheim (DE)
(72) Erfinder: UNTCH, Günter, 79379 Müllheim (DE); LAIS, Peter, 79379 Müllheim (DE); KOCH, Martin, 79295 Neuenburg (DE)
(74) Vertreter: Bartels, Martin Erich Arthur
(86) Internationale Anmeldenummer: PCT/DE2012/100346
(87) Internationale Veröffentlichungsnummer: WO 2013/071924

(56) Entgegenhaltungen:
- WO-A1-2008/078221
- WO-A1-2010/118817
- DE-B3-102006 051 513
- GB-A- 2 306 376
- US-A- 5 405 053
- US-A1- 2005 232 731
- US-A1- 2008 145 198

## Beschreibung

Die Erfindung betrifft ein Entleerverfahren und eine Entleervorrichtung für ein kontaminationsfreies Entleeren eines zumindest teilweise flexiblen Gebindes nach dem Oberbegriff des Anspruchs 1 bzw. Anspruch 3.

Bei der Weiterverarbeitung von Rohstoffen, die bei direktem Kontakt eine erhebliche Gesundheitsgefährdung für die mit diesen Stoffen arbeitenden Menschen darstellen würden, ist in vielen Industriezweigen, beispielsweise der Pharma- oder Chemieindustrie, auf erhöhte Sauberkeit bzw. ein absolut kontaminationsfreies Arbeiten zu achten. Auch bei geringeren Anforderungen an die Kontaminationsfreiheit wird bisher erheblicher Aufwand getrieben, ein Entleeren von zumindest teilweise flexiblen Gebinden in eine Produktionseinheit oder ein weiteres flexibles Gebinde zu ermöglichen. Meist werden bekannte Isolatoren an entsprechenden Schnittstellen verwendet. Bekannte Verfahren bzw. Vorrichtungen sind beispielsweise DE 10 2009 017 545 A1 oder DE 10 2006 057 760 B3 zu entnehmen.

Bei der bekannten Vorrichtung aus DE 10 2006 057 760 B3 ist ein Liner eine Befüllöffnung eines Grundkörpers umschließend an dem Grundkörper befestigt.

Diese Art der Befestigung löst jedoch nicht das Problem des Andockens von verschlossenen zumindest teilweise flexiblen Gebinden.

Die Aufgabe der Erfindung besteht folglich darin, ein kostengünstiges, einfach zu handhabendes und absolut sauberes, insbesondere kontaminationsfreies Verfahren und eine Vorrichtung zur Durchführung des Verfahrens zum umweltdichten Anschluss zumindest teilweise flexibler Gebinde an eine verfahrenstechnische Anlage bereitzustellen.

Die DE 10 2006 051 513 B3 beschreibt ein Verfahren zum Betreiben einer Verpackungsentleerstation. In einem horizontalen Aufbau wird eine Verpackung zunächst in einen endseitig verschlossenen Liner eingeschoben. Danach wird der Liner am gegenüberliegenden Ende der Verpackung verschlossen, so dass die Verpackung von dem Liner vollständig umfasst ist. Anschließend wird das so gebildete Paket über eine Entleeröffnung geschoben und mit einem Messer geöffnet, so dass die Verpackung entleert wird.

Die US 2008/0145198 A1 offenbart eine Vorrichtung zum Entleeren von Verpackungen. Ein eine Öffnung umgebender und daran befestigter Endlosliner wird endseitig verschlossen und das verschlossene Ende in die Öffnung umgestülpt. Sodann kann ein Füllgut in den Liner eingelegt werden. Durch Trennen des Liners von der Öffnung fällt das Füllgut mit dem abgetrennten Linerende in die Öffnung.

Diese Aufgabe wird erfindungsgemäß gelöst durch ein Verfahren mit den kennzeichnenden Merkmalen des Anspruchs 1 bzw. eine Vorrichtung mit den Merkmalen des Anspruchs 3.

Vorteilhafte Ausführungen der Erfindungen sind in den jeweiligen Unteransprüchen angegeben.

Das erfindungsgemäße Entleerverfahren für ein kontaminationsfreies Entleeren eines zumindest teilweise flexiblen Gebindes, bei dem das Gebinde in einen Grundkörper entleert wird, wobei ein Liner eine Befüllöffnung des Grundkörpers umschließend an dem Grundkörper befestigt ist, weist die aufeinanderfolgenden Verfahrensschritte auf: (a) Einstülpen des Liners, wobei dieser durch ein Befüllende verschlossen ist und somit der Liner die Befüllöffnung verschließt, so dass ein Aufnahmebereich entsteht, in den das Gebinde vollständig einführbar ist; (b) Einführen des Gebindes in den Aufnahmebereich, wobei der Liner mit einem zumindest doppelwandigen Ende über das Gebinde hinaus reicht und zumindest mit dem zumindest doppelwandigen Ende das Gebinde vollumfänglich umgibt; (c) Verschließen des Liners, so dass der Aufnahmebereich verschlossen ist; (d) Öffnen des Liners im Aufnahmebereich und des Gebindes, so dass zwischen dem Gebinde und der Befüllöffnung eine ein Füllmaterial des Gebindes durchlassende Entleeröffnung entsteht, wobei der Aufnahmebereich und die Befüllöffnung nach außen verschlossen sind; (e) Entleeren des Gebindes; (f) Verschließen des Liners zwischen dem Gebinde und der Befüllöffnung in mindestens einem Verschlussbereich; und (g) Trennen des Liners an einer Trennstelle innerhalb des Verschlussbereichs oder zwischen zwei beabstandet zueinander erzeugten Verschlussbereichen, so dass befüllöffnungsseitig ein verschlossenes Ende als Befüllende bereitsteht.

Die Erfindung ermöglicht ein umweltdichtes Verbinden, auch kontaminationsfreies Andocken genannt, eines zumindest teilweise flexiblen Gebindes an eine verfahrenstechnische Anlage, die eine Befüllöffnung in einem Grundkörper aufweist. Die Verwendung eines Isolators ist nicht nötig. Die Erfindung ermöglicht das Andocken beliebiger Gebinde, die zumindest einen flexiblen Bereich aufweisen, der durch ein Messer einschneidbar ist, beispielsweise ein Metallcontainer mit angeschweißtem Folienboden.

Gemäß dem erfindungsgemäßen Verfahren ist das Gebinde mit dem flexiblen Bereich der Befüllöffnung zugewandt ausgerichtet. Handelt es sich um ein vollständig flexibles Gebinde, wie einen Sack, kommt es auf eine besondere Ausrichtung nicht an.

Das erfindungsgemäße Verfahren ermöglicht einen Einschluss des Gebindes in einem Liner.

Unter dem Begriff Liner versteht der Fachmann eine Art Schlauch oder eine Schlauchfolie. Der Liner wird beispielsweise als Endlosliner in einer Linerkassette bereitgestellt. In der Linerkassette ist der Liner platzsparend zusammengelegt. Bei bekannten Befüllöffnungen ist die Linerkassette die Befüllöffnung umschließend an dem Grundkörper befestigt.

Das Verfahren weist die folgenden Verfahrensschritte auf:
Der Liner kann an einem über der Befüllöffnung verschlossenen Befüllende in einer gewissen Anfangslänge aus der Linerkassette herausgezogen werden, bevor das Verfahren beginnt. Dann erfolgt ein Einstülpen des Liners, insbesondere dessen Befüllendes. Somit verschließt der Liner die Befüllöffnung nach wie vor. Es entsteht ein Aufnahmebereich, in den das Gebinde vollständig einführbar ist.

Es erfolgt ein Einführen des Gebindes in den Aufnahmebereich, wonach der Liner mit einem zumindest doppelwandigen Ende über das Gebinde meist hinausreicht. Nötigenfalls muss der Liner weiter aus der Linerkassette herausgezogen werden. Es ist jedoch nicht erforderlich, dass das zumindest doppelwandige Ende übersteht, wenn beispielsweise ein Vercrimpen oder Verschweißen des zumindest doppelwandigen Endes gemeinsam mit dem Gebinde möglich ist.

Es folgt ein Verschließen des Liners, so dass der Aufnahmebereich verschlossen ist.

Auf der der Befüllöffnung zugewandten Seite wird der Liner nachfolgend geöffnet, insbesondere aufgeschnitten, besonders bevorzugt sein eingestülptes Befüllende. Gleichzeitig wird das Gebinde aufgeschnitten, so dass weitgehend übereinstimmende Entleeröffnung des Gebindes sowie des Liners übereinanderliegen. Zwischen dem Gebinde und der Befüllöffnung entsteht dadurch eine einen Inhalt des Gebindes durchlassende Sacköffnung. Der zur Befüllöffnung hin geöffnete Aufnahmebereich bleibt dabei nach außen abgeschlossen.

Schließlich kommt es zum Entleeren des Gebindes.

In einer vorteilhaften Ausführungsform des erfindungsgemäßen Verfahrens wird nach dem Aufschneiden des Liners und des Gebindes der Liner das Gebinde mitnehmend von der Befüllöffnung abgehoben. Besonders vorteilhaft geschieht dies unmittelbar nach dem Aufschneiden und noch während des Entleerens. Gemäß dem erfindungsgemäßen Verfahren wird nach dem Entleeren zwischen dem Gebinde und der Befüllöffnung in mindestens einem Verschlussbereich der Liner verschlossen. Dies kann durch Verschweißen oder Vercrimpen erfolgen. Gemäß dem erfindungsgemäßen Verfahren, erfolgt nach dem Verschließen innerhalb des Verschlussbereichs oder zwischen zwei beabstandet zueinander erzeugten Verschlussbereichen ein Trennen des Liners an einer Trennstelle, so dass befüllöffnungsseitig ein verschlossenes Ende als Befüllende bereit steht.

Solche erfindungsgemäße Verfahren sind gegenüber bekannten Verfahren kostengünstiger, da kein Isolator benötigt wird, um das Gebinde kontaminationsfrei zu entleeren. Zu jeder Zeit ist das in dem Gebinde ursprünglich enthaltene Material unter Verschluss. Auch das entleerte Gebinde - oft nicht vollständig entleert - ist vollständig geschlossen für eine Entsorgung bereitstellbar.

Gemäß einer vorteilhaften Ausführungsform einer Entleervorrichtung für das erfindungsgemäße Entleerverfahren ist radial die Befüllöffnung umgebend eine Linerkassette mit einem Liner an dem Grundkörper angeordnet. Ist der Liner an dem Befüllende verschlossen, ist auch der gesamte Grundkörper über eine entsprechende Befestigung der Linerkassette an dem Grundkörper vollständig verschlossen. Aus der Linerkassette ist der Liner von der Befüllöffnung weg herausziehbar, insbesondere durch eine Hub- und Greifvorrichtung.

Bei der erfindungsgemäßen Entleervorrichtung ist in einem Bereich der Befüllöffnung eine Schneidvorrichtung angeordnet, insbesondere eine Hub- und Schneidvorrichtung mit einem dem Gebinde entgegenbewegbaren Messer.

Gemäß einer weiteren vorteilhaften Ausführungsform der erfindungsgemäßen Entleervorrichtung ist die Befüllöffnung teilweise durch einen Fangrost verschlossen.

Ein derartiger Fangrost verhindert für den Fall, dass sich das Gebinde in dem Aufnahmebereich löst und das Gebinde durch die durch das Aufschneiden entstandene Entleeröffnung des Liners in die Befüllöffnung hineinzufallen droht, ein Verstopfungen der verfahrenstechnischen Anlage. Gemäß einer weiteren vorteilhaften Ausführungsform der erfindungsgemäßen Entleervorrichtung ist das Messer derart auf der dem Gebinde abgewandten Seite des Fangrostes angeordnet, und weist das Fangrost entsprechend dem Messer angeordnete Durchtrittsöffnungen auf, dass das Messer den Fangrost durchdringend gegen das Gebinde bewegbar ist.

Durch eine derartige Ausführungsform ist eine Verletzungsgefahr, welche grundsätzlich durch das Messer gegeben wäre, beseitigt. Ebenso kann es nicht zu einem ungewollten Verletzen von Gebinden kommen.

Im Folgenden wird die Erfindung anhand von Zeichnungen näher erläutert. Es werden die Verfahrensschritte jeweils in einer Schnittansicht gezeichnet, wobei etwa ein Viertel in Umfangsrichtung als Kuchenstück herausgeschnitten ist, um einen Einblick in die Vorrichtung zu gewähren. Es zeigen:
- Fig. 1: eine schematisch vereinfachte Darstellung eines Gebindes und einer darunter angeordneten Entleervorrichtung für ein erfindungsgemäßes Verfahren gemäß einem Ausführungsbeispiel mit einem verschlossenem Befüllende eines Liners;
- Fig. 2: die Entleervorrichtung aus Fig. 1 mit eingestülptem Befüllende;
- Fig. 3: die Entleervorrichtung aus Fig. 2 mit eingeführtem Gebinde;
- Fig. 4: die Entleervorrichtung aus Fig. 3 mit um das Gebinde verschlossenem Aufnahmebereich;
- Fig. 5: die Entleervorrichtung aus Fig. 4 mit in das Befüllende und das Gebinde eindringendem Messer;
- Fig. 6: die Entleervorrichtung aus Fig. 5 mit abgehobenem Gebinde;
- Fig. 7: die Entleervorrichtung aus Fig. 5 mit abgehobenem Gebinde und Trennstelle; und
- Fig. 8: die Entleervorrichtung aus Fig. 7 mit abgetrenntem Befüllende.

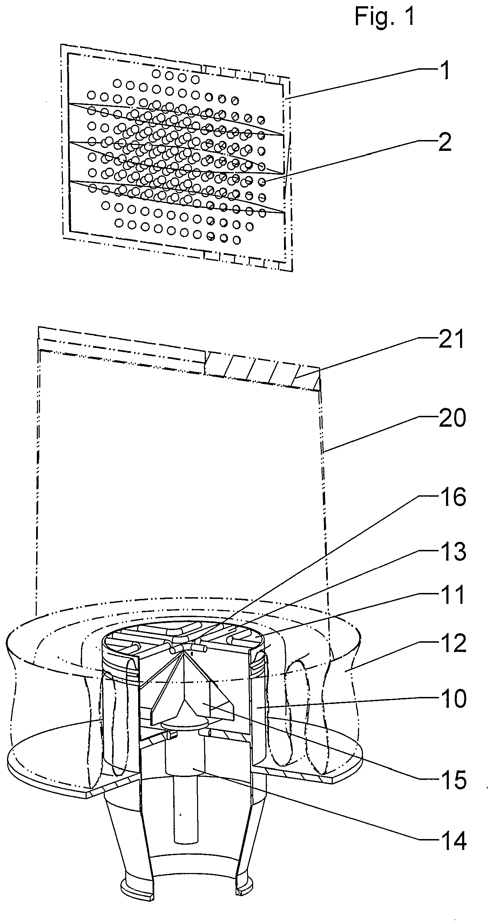

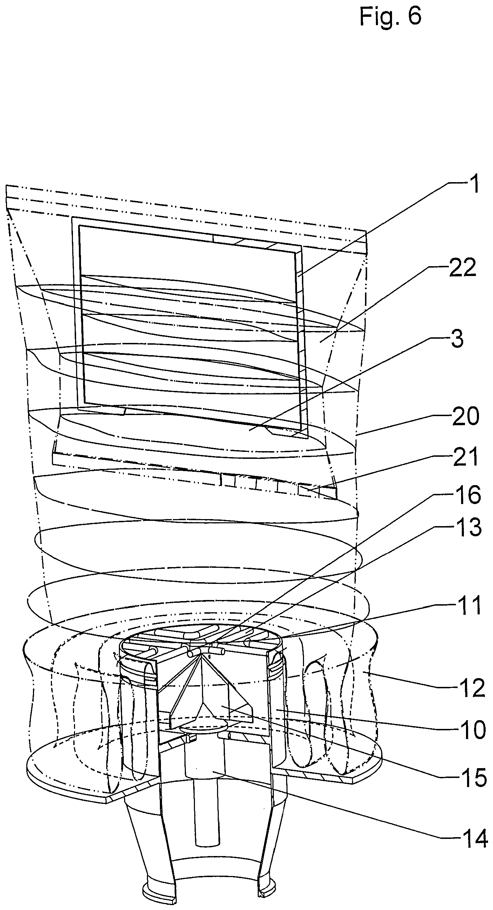

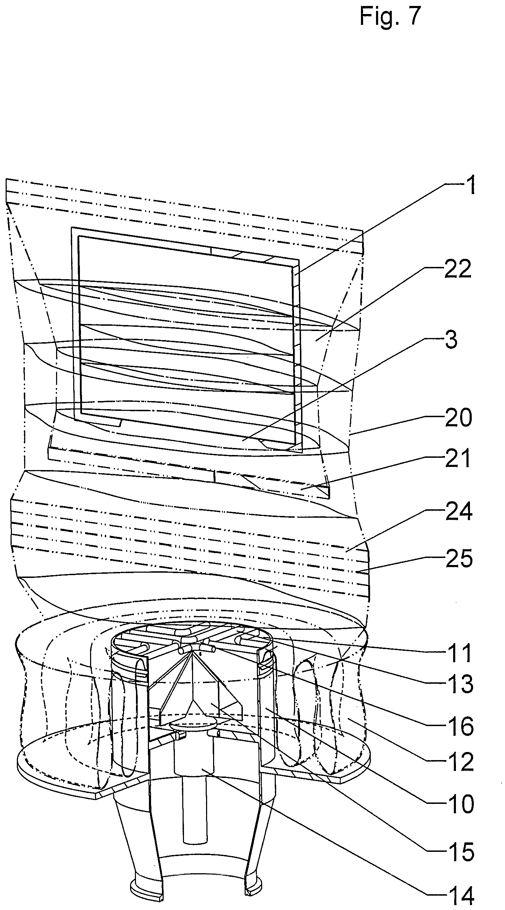

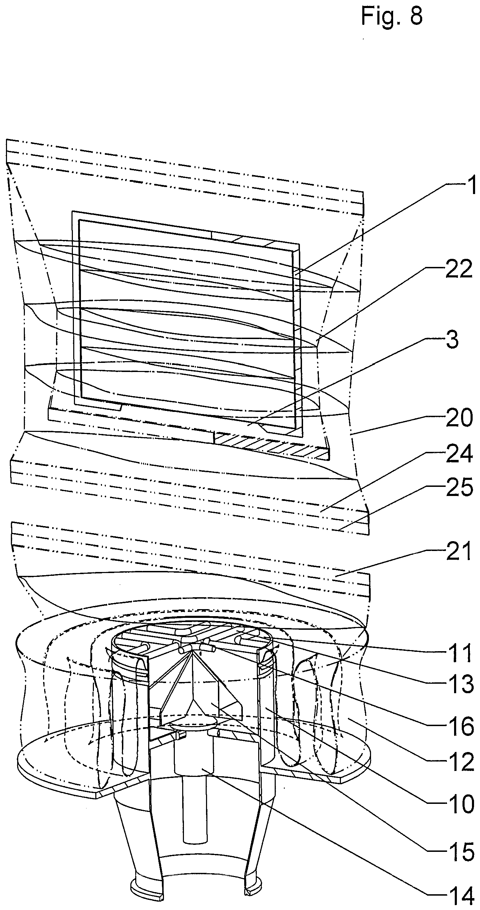

In den Figuren 1 bis 8 ist ein Ausführungsbeispiel einer erfindungsgemäßen Entleervorrichtung in perspektivischen Darstellungen gezeigt, wobei mit einem Kuchenschnitt ein Einblick in das Innere der Entleervorrichtung gewährt ist. Die Figuren 1 bis 8 offenbaren aufeinander folgend betrachtet das erfindungsgemäße Entleerverfahren.

Eine für das erfindungsgemäße Entleerverfahren vorgesehene Entleervorrichtung ist gemäß dem dargestellten Ausführungsbeispiel in einer Art Anschlussstutzen einer verfahrenstechnischen Anlage integriert, beispielsweise ein Anschlussstutzen einer Rohrleitung oder eines Behälters. Die Entleervorrichtung hat einen Grundkörper 10 in dem eine Befüllöffnung 11 bereit steht, um die Anlage zu befüllen. Über dem Grundkörper 10 ist ein Gebinde 1 dargestellt, dessen Inhalt 2 in die Befüllöffnung 11 einzufüllen ist. Um Kontaminationen zu verhindern, wird das Befüllen der nicht vollständig dargestellten verfahrenstechnischen Anlage bzw. das Entleeren des Gebindes 1 umweltdicht ausgeführt.

Die Befüllöffnung 11 umschließend ist eine Linerkassette 12 angeordnet, aus der heraus zum Gebinde 1 hin ein Liner 20 ausziehbar ist. Der Liner ist als ein Schlauch mittels der endlos Linerkassette 12 umweltdicht mit dem Grundkörper 10 verbunden. Der Liner lässt sich nach oben in Richtung des Gebindes 1 aus der Linerkassette 12 herausziehen.

Das aus der Linerkassette 12 herausziehbare Ende des Liners 20 wird als Befüllende 21 bezeichnet. Es ist mittels einer Schweißnaht verschlossen. Alternativ kann das Befüllende vercrimpt sein.

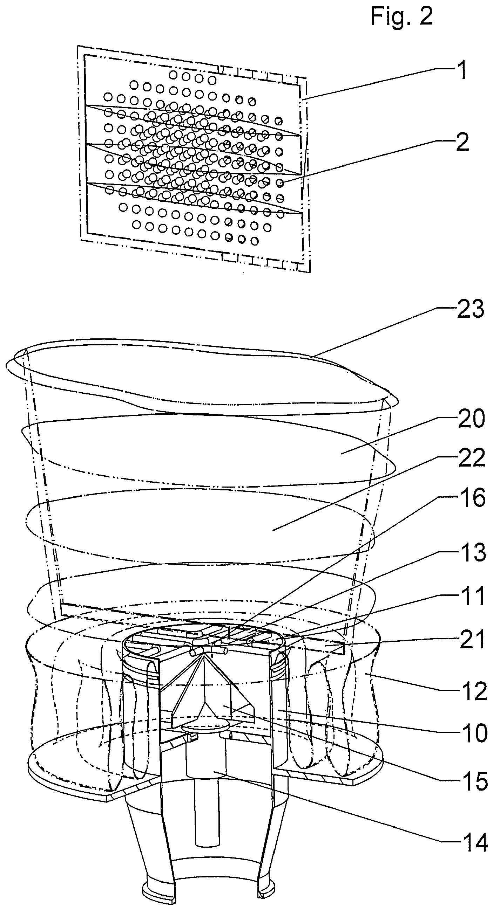

In Fig. 2 ist gezeigt, wie das Befüllende 21 nach innen umgeschlagen wird, um einen Aufnahmebereich 22 zu bilden.

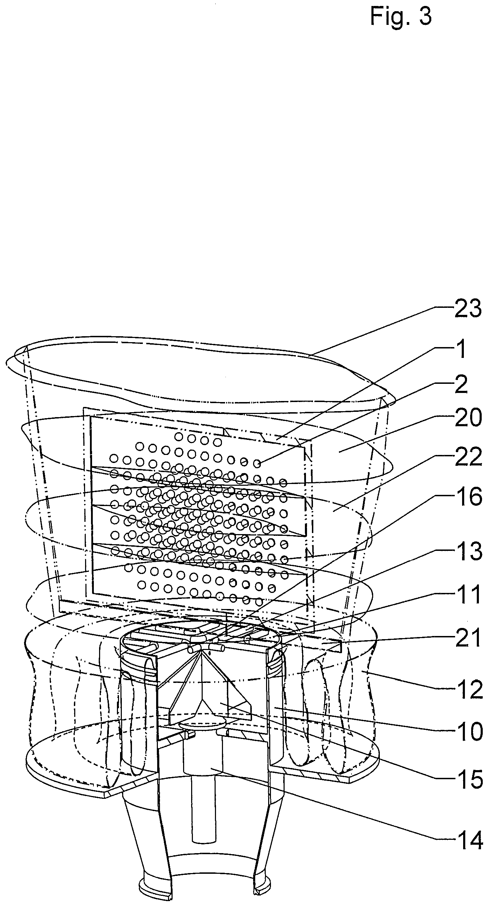

In Fig. 3 ist dargestellt, dass das Gebinde 1 sich vollständig in dem Aufnahmebereich 22 aufnehmen lässt.

Die nicht sichtbaren Konturen des Gebindes 1 wie auch des Liners 20 sind in allen Figuren gestrichelt dargestellt. Der Inhalt 2 des Gebindes, üblicherweise ein Fluid oder ein körniges Material, ist mit Kreisen angedeutet.

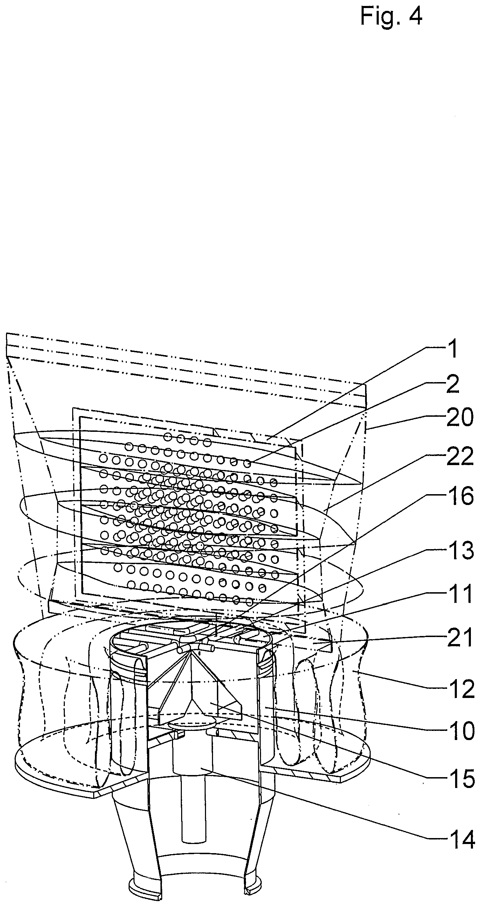

Die Fig. 4 zeigt den Aufnahmebereich 22 nach einem verschließen eine über das Gebinde hinausstehenden doppelwandigen Endes 23. Das Gebinde 1 ist grundsätzlich frei beweglich in dem Aufnahmebereich 22 abgeschlossen. In besonders vorteilhaften Ausführungsformen kann es vorgesehen sein, dass Gebinde in dem Aufnahmebereich 22 zu fixieren, insbesondere beim Verschließen des doppelwandigen Endes 23 mit einzuschweißen.

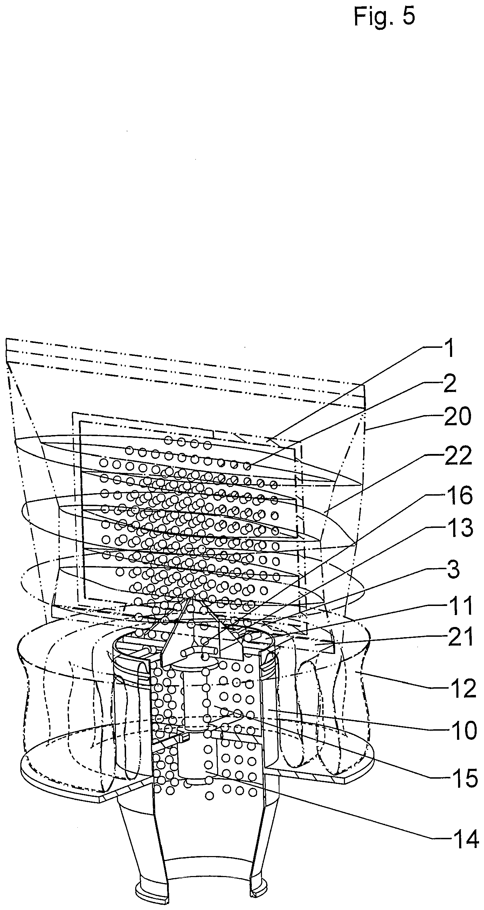

In Fig. 5 ist gezeigt, wie aus der Befüllöffnung 11 heraus durch einen Fangrost 13 hindurch ein Messer 15 in das Befüllende 21 und das Gebinde 1 eintaucht, so dass der mit Kreisen dargestellte Inhalt 2 aus dem Gebinde 1 in die verfahrenstechnische Anlage entleert wird.

Nach oder während des Entleerens wird an dem doppelwandigen Ende 23 der Liner 20 weiter nach oben aus der Linerkassette 12 herausgezogen. Ein freier Bereich ergibt sich zwischen Befüllende 21 und Befüllöffnung 11 als ein Verschlussbereich 24. Der Verschlussbereich 24 entsteht durch Vercrimpen oder Verschweißen, insbesondere eine sogenannte Doppelschweißnaht mit Perforierung. Die Perforierung ist eine besondere Form einer Trennstelle 25 im Verschlussbereich 24. Die Trennstelle 25 kann auch zwischen zwei erzeugten Verschlussbereichen angeordnet sein.

### Bezugszeichenliste

- 1: Gebinde
- 2: Inhalt
- 3: Entleeröffnung
- 10: Grundkörper
- 11: Befüllöffnung
- 12: Linerkassette
- 13: Fangrost
- 14: Schneidvorrichtung
- 15: Messer
- 16: Durchtrittsöffnung
- 20: Liner
- 21: Befüllende
- 22: Aufnahmebereich
- 23: doppelwandiges Ende
- 24: Verschlussbereich
- 25: Trennstelle

## Patentansprüche

1. Entleerverfahren für ein kontaminationsfreies Entleeren eines zumindest teilweise flexiblen Gebindes, bei dem das Gebinde (1) in einen Grundkörper (10) entleert wird, wobei ein Liner (20) eine Befüllöffnung (11) des Grundkörpers (10) umschließend an dem Grundkörper (10) befestigt ist, mit den aufeinanderfolgenden Verfahrensschritten:
a. Einstülpen des Liners (20), wobei dieser durch ein Befüllende (21) verschlossen ist und somit der Liner (20) die Befüllöffnung (11) verschließt, so dass ein Aufnahmebereich (22) entsteht, in den das Gebinde (1) vollständig einführbar ist;
b. Einführen des Gebindes (1) in den Aufnahmebereich (22), wobei der Liner (20) mit einem zumindest doppelwandigen Ende (23) über das Gebinde (1) hinaus reicht und zumindest mit dem zumindest doppelwandigen Ende (23) das Gebinde (1) vollumfänglich umgibt;
c. Verschließen des Liners (23), so dass der Aufnahmebereich (22) verschlossen ist;
d. Öffnen des Liners (20) im Aufnahmebereich (22) und des Gebindes (1), so dass zwischen dem Gebinde (1) und der Befüllöffnung (11) eine ein Füllmaterial (2) des Gebindes (1) durchlassende Entleeröffnung (3) entsteht, wobei der Aufnahmebereich (22) und die Befüllöffnung (11) nach außen verschlossen sind;
e. Entleeren des Gebindes (1);
f. Verschließen des Liners (20) zwischen dem Gebinde (1) und der Befüllöffnung (11) in mindestens einem Verschlussbereich (24); und
g. Trennen des Liners (20) an einer Trennstelle (25) innerhalb des Verschlussbereichs (24) oder zwischen zwei beabstandet zueinander erzeugten Verschlussbereichen, so dass befüllöffnungsseitig ein verschlossenes Ende als Befüllende (21) bereitsteht.

2. Entleerverfahren nach Anspruch 1, **dadurch gekennzeichnet, dass** der Liner (20) nach dem Aufschneiden (d) das Gebinde (1) mitnehmend von der Befüllöffnung (11) abgehoben wird, insbesondere unmittelbar nach dem Aufschneiden (d) und noch während des Entleerens (e).

3. Entleervorrichtung für ein Entleerverfahren nach Anspruch 1 oder 2, **dadurch gekennzeichnet, dass** die Befüllöffnung (11) radial umgebend eine Linerkassette (12) angeordnet ist, insbesondere eine Endloslinerkassette, aus der der Liner (20) von der Befüllöffnung (11) weg herausziehbar ist, insbesondere durch eine Hub- und Greifvorrichtung, und dass in einem Bereich der Füllöffnung eine Schneidvorrichtung (14) angeordnet ist, insbesondere eine Hub- und Schneidvorrichtung mit einem dem Gebinde (1) entgegen bewegbaren Messer (15).

4. Entleervorrichtung nachAnspruch 3, **dadurch gekennzeichnet, dass** die Befüllöffnung (11) teilweise durch einen Fangrost (13) verschlossen ist.

5. Entleervorrichtung nach Anspruch 3 oder 4, **dadurch gekennzeichnet, dass** das Messer (15) derart auf der dem Gebinde (1) abgewandten Seite des Fangrohstes (13) angeordnet ist und der Fangrost (13) eine entsprechend dem Messer (15) angeordnete Durchtrittsöffnung (16) aufweist, so dass das Messer (15) den Fangrost (13) durchdringend gegen das Gebinde (1) bewegbar ist.

## Claims

1. A discharge method for discharging an at least partially flexible container without any contamination, wherein the container (1) is discharged into a base body (10), a liner (20) enclosing a filling opening (11) of the base body (10) being fastened to the base body (10), comprising the following sequence of process steps:
a. folding the liner (20) inward, the latter being sealed by a filling end (21) so that the liner (20) seals the filling opening (11) and so a receiving area (22) being created into which the container (1) may be completely inserted;
b. inserting the container (1) into the receiving area (22), the liner (20) extending with an at least double-walled end (23) over the container (1) and totally surrounding the container (1) at least with the at least double-walled end (23);
c. sealing the liner (23) so that the receiving area (22) is sealed;
d. opening the liner (20) in the receiving area (22) and the container (1) so that a discharge opening (3) through which the contents (2) of the container (1) can pass is produced between the container (1) and the filling opening (11), the receiving area (22) and the filling opening (11) being sealed to the outside;
e. discharging of the container (1);
f. sealing the liner (20) between the container (1) and the filling opening (11) in at least one sealing region (24); and
g. separating the liner (20) at a separation point (25) within the sealing region (24) or between two sealing regions created a distance apart from one another so that a sealed end is provided as a filling end (21) on the side of the filling opening.

2. The discharge method according to Claim 1, **characterised in that** after the cutting open (d), in particular immediately after the cutting open (d) and during the discharging (e), the liner (20) is lifted away from the filling opening (11), bringing the container (1) with it.

3. The discharge device for a discharge method according to Claim 1 or 2, **characterised in that** the filling opening (11) is radially disposed enclosing a liner cassette (12), in particular a continuous liner cassette, from which the liner (20) can be drawn out away from the filling opening (11), in particular by a lifting and gripping device, and that a cutting device (14), in particular a lifting and cutting device with a blade (15) that can be moved towards the container (1), is disposed in a region of the filling opening.

4. The discharge device according to Claim 3, **characterised in that** the filling opening (11) is partially sealed by a catch grid (13).

5. The discharge device according to Claim 3 or 4, **characterised in that** the blade (15) is disposed on the side of the catch grid (13) facing away from the container (1), and the catch grid (13) has an opening (16) arranged to correspond to the blade (15) so that the blade (15) can be moved towards the container (1), passing through the catch grid (13).

## Revendications

1. Procédé pour vider un emballage au moins partiellement souple sans contamination, dans lequel on vide l'emballage (1) dans un corps (10) de base, une doublure (20) entourant une ouverture (11) de remplissage du corps (10) de base, étant fixée au corps (10) de base, comprenant les stades de procédé successifs :
a. on retrousse la doublure (20), celle-ci étant fermée par une extrémité (21) de remplissage et la doublure (20) fermant ainsi l'ouverture (11) de remplissage, de manière à créer une région (22) de réception, dans laquelle l'emballage (1) peut être introduit complètement ;
b. on introduit l'emballage (1) dans la région (22) de réception, la doublure (20) allant, par une extrémité (23) au moins à double paroi, au-delà de l'emballage (1) et entourant, complètement sur le pourtour, l'emballage (1), au moins par l'extrémité (23) au moins à double paroi ;
c. on ferme la doublure (23), de manière à fermer la région (22) de réception ;
d. on ouvre la doublure (20) dans la région (22) de réception et de l'emballage (1), de manière à créer, entre l'emballage (1) et l'ouverture (11) de remplissage, une ouverture (3) de vidange traversant une matière (2) de remplissage de l'emballage (1), la région (22) de réception et l'ouverture (11) de remplissage étant fermées vers l'extérieur ;
e. on vide l'emballage (1) ;
f. on ferme la doublure (20) entre l'emballage (1) et l'ouverture (11) de remplissage, dans au moins une région (24) de fermeture et
g. on sépare la doublure (20) en un point (25) de séparation à l'intérieur de la région (24) de fermeture ou entre deux régions de fermeture produites à distance l'une de l'autre, de manière à disposer, du côté de l'ouverture de remplissage, d'une extrémité fermée comme extrémité (21) de remplissage.

2. Procédé suivant la revendication 1, **caractérisé en ce qu'**on soulève la doublure (20) de l'ouverture (11) de remplissage, après la coupe (d), en entraînant l'emballage (1), notamment juste après la coupe (d) et encore pendant que l'on vide (e).

3. Dispositif pour vider pour un procédé pour vider suivant la revendication 1 ou 2, **caractérisé en ce que** l'ouverture (11) de remplissage est disposée en faisant le tour radialement d'une cassette (12) de doublure, notamment d'une cassette de doublure sans fin, de laquelle la doublure (20) peut être tirée en éloignant l'ouverture (11) de remplissage, notamment par un dispositif de levage et de préhension et **en ce qu'**il est disposé un dispositif (14) de coupe dans une région de l'ouverture de remplissage, notamment un dispositif de levage et de coupe ayant un couteau (15) mobile contre l'emballage (1).

4. Dispositif suivant la revendication 3, **caractérisé en ce que** l'ouverture (11) de remplissage est fermée en partie par une grille (13) d'arrêt.

5. Dispositif suivant la revendication 3 ou 4, **caractérisé en ce que** le couteau (15) est disposé du côté, éloigné de l'emballage (1), de la grille (13) d'arrêt et la grille (13) d'arrêt a une ouverture (16) de passage disposée conformément au couteau (15), de manière à ce que le couteau (15) puisse être déplacé contre l'emballage (1) en traversant la grille (13) d'arrêt.
